# EUROPÄISCHE PATENTSCHRIFT

(11) **EP 3 312 029 B1**
(45) Veröffentlichungstag und Bekanntmachung des Hinweises auf die Patenterteilung: **11.03.2020**
(21) Anmeldenummer: 17194705.4
(22) Anmeldetag: 04.10.2017
(51) Int. Cl.: B60G 17/0165, B60G 23/00

(54) **VERFAHREN ZUM BETREIBEN EINES FAHRZEUGS UND FAHRZEUG**
METHOD FOR OPERATING A VEHICLE AND VEHICLE
PROCÉDÉ DE FONCTIONNEMENT D'UN VÉHICULE ET VÉHICULE

(30) Priorität: 13.10.2016 DE 102016012230
(43) Veröffentlichungstag der Anmeldung: 25.04.2018
(73) Patentinhaber: MAN Truck & Bus SE, 80995 München (DE)
(72) Erfinder: Gruber, Christian, 85402 Kranzberg (DE); Mayrock, Matthias, 85757 Karlsfeld (DE)
(74) Vertreter: Liebl, Thomas

(56) Entgegenhaltungen:
- DE-A1-102005 051 141
- DE-A1-102011 007 608
- DE-A1-102012 022 367
- DE-T5-112012 006 147
- JP-A- 2005 178 530

## Beschreibung

Die Erfindung betrifft ein Verfahren zum Betreiben eines Fahrzeugs, insbesondere eines Nutzfahrzeugs, nach dem Oberbegriff des Patentanspruchs 1.

Es ist allgemein bekannt, an einem Fahrzeug ein Fahrwerkregelsystem vorzusehen, mittels dem Feder- und/oder Dämpfereigenschaften eines Fahrwerks des Fahrzeugs während der Fahrt mit dem Fahrzeug in Abhängigkeit von wenigstens einem Parameter selbsttätig bzw. automatisch verstellt werden. Mittels eines derartigen Fahrwerkregelsystems können beispielsweise die Sicherheit und der Komfort des Fahrzeugs erhöht werden, indem Radlastschwankungen bzw. Aufbaubeschleunigungen verringert werden. Um die Wirkung des Fahrwerkregelsystems zu verbessern, ist es weiter auch bekannt, Informationen zu dem Zustand eines vor dem fahrenden Fahrzeugs befindlichen Fahrbahnbereichs an das Fahrwerkregelsystem zu übermitteln. Mit Hilfe dieser Informationen kann das Fahrwerkregelsystem dann beispielsweise rechtzeitig bzw. frühzeitig auf vor dem Fahrzeug befindliche Fahrbahnunebenheiten, beispielsweise Schlaglöcher, reagieren und das Fahrwerk optimal auf die vorausliegenden Fahrbahnunebenheiten einstellen. Ist der vorausliegende Fahrbahnzustand nicht bekannt, kann das Fahrwerkregelsystem lediglich mit einer zeitlichen Verzögerung auf den Fahrbahnzustand reagieren, insbesondere erst nach der Detektion von Beschleunigungen/Federwegen und nach Ansprechen der Aktorik.

Beispielhaft ist aus der DE 10 2008 052 132 A1 ein Verfahren zum Verbessern des Fahrverhaltens eines sich auf einer Fahrbahn befindlichen ersten Kraftfahrzeugs bekannt, bei dem das erste Kraftfahrzeug mindestens ein aktives Fahrwerkselement aufweist, das eine Karosserie des ersten Kraftfahrzeugs gegenüber mindestens einem Rad des Kraftfahrzeugs abstützt. Mit dem ersten Kraftfahrzeug wird dabei eine Beschaffenheitsinformation empfangen, die Unebenheiten der Fahrbahn charakterisiert. Diese Beschaffenheitsinformation wird von wenigstens einem zweiten Kraftfahrzeug erfasst. Das aktive Fahrwerkselement wird dann in Abhängigkeit von der empfangenen Beschaffenheitsinformation beeinflusst. Hat somit beispielsweise das zweite Kraftfahrzeug die Fahrbahn vor dem ersten Kraftfahrzeug befahren, kann das Fahrwerk des ersten Kraftfahrzeugs an die mit dem zweiten Fahrzeug erfassten Verhältnisse der von dem ersten Kraftfahrzeug zu befahrenden Fahrbahn angepasst werden.

Aus der DE 10 2012 022 367 A1 ist eine gattungsgemäße Regelung und/oder Steuerung der Dämpfungs- und/oder Stabilisierungsvorrichtung eines Kraftfahrzeugs bekannt. Aus der DE 10 2011 007 608 A1 ist ein Verfahren und ein System zur aktiven Fahrwerksregelung bekannt. Aus der DE 10 2005 051 141 A1 ist ein Regelungsverfahren für ein elektronisch regelbares Dämpfungssystem in Fahrzeugen bekannt. Aus der JP 2005 178 530 A ist ein weiteres Verfahren zum Betreiben eines Fahrzeugs bekannt. Aus der DE 11 2012 006 147 T5 ist eine Straßenoberflächen-Zustands-Bestimmungsvorrichtung bekannt.

Aufgabe der Erfindung ist es, ein Verfahren zum Betreiben eines Fahrzeugs bereitzustellen, mittels denen der Zustand des vor dem Fahrzeug befindlichen Fahrbahnbereichs auf besonders einfache und effektive Weise ermittelt werden kann.

Diese Aufgabe wird durch die Merkmale des Anspruches 1 gelöst. Bevorzugte Weiterbildungen sind in den abhängigen Ansprüchen offenbart.

Erfindungsgemäß wird ein Verfahren zum Betreiben eines Fahrzeugs, insbesondere eines Nutzfahrzeugs, vorgeschlagen, wobei das Fahrzeug eine Bild-Erfassungseinrichtung, insbesondere eine Kamera, aufweist, mittels der ein in Fahrtrichtung vor dem Fahrzeug, insbesondere auf der gleichen Fahrspur, fahrendes Vorderfahrzeug, insbesondere zusammen mit einem vor dem Fahrzeug befindlichen Fahrbahnbereich, mit wenigstens einer Aufnahme bildlich und/oder filmisch erfasst wird. Erfindungsgemäß weißt das Fahrzeug eine Bild-Auswerteeinrichtung auf, mittels der aus der wenigstens einen Aufnahme der Bild-Erfassungseinrichtung die Vertikalbewegung wenigstens eines Teilbereichs des Vorderfahrzeugs, insbesondere einer Karosserie des Vorderfahrzeugs, relativ zur Fahrbahn und/oder relativ zur Bild-Erfassungseinrichtung ermittelt wird. Zudem weist das Fahrzeug eine Fahrbahnzustand-Ermittlungseinrichtung auf, mittels der aus der ermittelten Vertikalbewegung des Vorderfahrzeugs der Zustand eines von dem Vorderfahrzeug befahrenen und vor dem Fahrzeug befindlichen, vorausliegenden Fahrbahnbereichs ermittelt bzw. abgeschätzt wird. Die ermittelten Informationen zu dem Zustand des vorausliegenden Fahrbahnbereichs werden dann an wenigstens ein signaltechnisch mit der Fahrbahnzustand-Ermittlungseinrichtung verbundenes Fahrwerkregelsystem des Fahrzeugs übermittelt.

Auf diese Weise kann der Zustand des vor dem Fahrzeug befindlichen Fahrbahnbereichs besonders einfach und effektiv ermittelt werden, da der Zustand dieses Fahrbahnbereichs nun über die Bild- bzw. Videoauswertung der wenigstens einen Aufnahme der fahrzeugseitigen Bild-Erfassungseinrichtung ermittelt bzw. abgeschätzt wird. Somit muss der vorausliegende Fahrbahnzustand hier beispielsweise nicht mehr von einem anderen Fahrzeug ermittelt und an das eigene Fahrzeug übermittelt werden. Bei dem erfindungsgemäßen Verfahren ermittelt das Fahrzeug vielmehr eigenständig den Zustand des vorausliegenden Fahrbahnbereichs. Die erfindungsgemäße Verfahrensführung eignet sich dabei besonders für Lastkraftwagen als Fahrzeuge, die häufig, insbesondere auf Autobahnen und Bundesstraßen, in Kolonnen hintereinander fahren und somit regelmäßig ein vorausfahrendes Vorderfahrzeug vor sich haben.

In der erfindungsgemäßen Verfahrensführung wird mittels der Fahrbahnzustand-Ermittlungseinrichtung aus der ermittelten Vertikalbewegung des Vorderfahrzeugs erfasst, ob sich auf dem von dem Vorderfahrzeug befahrenen vorderen Fahrbahnbereich wenigstens eine, insbesondere diskontinuierliche, Fahrbahnunebenheit, insbesondere ein Schlagloch, eine Bodenwelle, ein Plattenstoß (bei Betonplatten-Autobahnen) oder eine Fräsung, befindet. So kann der Zustand des vorderen Fahrbahnbereichs effektiv und zweckmäßig eingeschätzt werden.

Die Fahrbahnzustands-Ermittlungseinrichtung weist eine Abstand-Ermittlungseinrichtung auf, mittels der der Abstand zwischen dem Fahrzeug und dem Vorderfahrzeug ermittelt wird. Mittels der Fahrbahnzustand-Ermittlungseinrichtung kann dann aus dem Abstand zwischen dem Fahrzeug und dem Vorderfahrzeug und aus der ermittelten Vertikalbewegung des Vorderfahrzeugs ein Abstand zwischen dem Fahrzeug und einer erfassten Fahrbahnunebenheit auf dem vorausliegenden Fahrbahnbereich ermittelt bzw. abgeschätzt werden. Die Abstand-Ermittlungseinrichtung kann dabei beispielsweise durch einen Radarsensor oder durch einen Lidarsensor gebildet sein. In einer einfachen Ausgestaltung kann der Abstand zwischen dem Fahrzeug und der erfassten Fahrbahnunebenheit dabei mit dem ermittelten Abstand zwischen dem Fahrzeug und dem Vorderfahrzeug in etwa zu dem Zeitpunkt, an dem das Vorderfahrzeug über die Fahrbahnunebenheit fährt, abgeschätzt werden.

Mittels der Fahrbahnzustands-Ermittlungseinrichtung wird aus dem ermittelten Abstand zwischen dem Fahrzeug und der wenigstens einen Fahrbahnunebenheit und aus der Geschwindigkeit des eigenen Fahrzeugs der Zeitpunkt ermittelt, an dem das Fahrzeug voraussichtlich die Fahrbahnunebenheit erreicht. Dieser ermittelte Zeitpunkt wird dann an das wenigstens eine Fahrzeugsystem übermittelt. Mit der Information zu dem Zeitpunkt, an dem das Fahrzeug voraussichtlich die Fahrbahnunebenheit erreicht, kann das Fahrwerkregelsystem des Fahrzeugs einfach und effektiv frühzeitig auf die vorausliegende Fahrbahnunebenheit reagieren. Bevorzugt ist dabei vorgesehen, dass bei der Ermittlung dieses Zeitpunkts auch die mittels einer Geschwindigkeits-Ermittlungseinrichtung der Fahrbahnzustands-Ermittlungseinrichtung ermittelte Geschwindigkeit des Vorderfahrzeugs berücksichtigt wird. Die Geschwindigkeit des Vorderfahrzeugs kann dabei beispielsweise aus der Geschwindigkeit des eigenen Fahrzeugs und der Änderung des ermittelten Abstands zwischen dem eigenen Fahrzeug und dem Vorderfahrzeug ermittelt werden.

Vorteilhaft ist es weiter, wenn mittels der Fahrbahnzustands-Ermittlungseinrichtung aus der ermittelten Vertikalbewegung des Vorderfahrzeugs auch die Art der wenigstens einen Fahrbahnunebenheit ermittelt wird. Die ermittelte Information zu der Art der wenigstens einen Fahrbahnunebenheit kann dann ebenfalls an das wenigstens eine Fahrzeugsystem übermittelt werden. So kann dem Fahrzeugsystem beispielsweise mitgeteilt werden, ob es sich bei der Fahrbahnunebenheit um ein Schlagloch oder um eine Bodenwelle handelt.

Mittels der Bild-Auswerteeinrichtung wird aus der wenigstens einen Aufnahme der Bild-Erfassungseinrichtung die Nickbewegung, die Wankbewegung und die Hochachsenbewegung bzw. Hebe- und Senkbewegung einer Karosserie des Vorderfahrzeugs relativ zur Fahrbahn als Vertikalbewegung ermittelt. Über die Nickbewegung, die Wankbewegung und die Hochachsenbewegung der Vorderfahrzeug-Karosserie, insbesondere auch über die Intensität und den zeitlichen Verlauf dieser Bewegungen, kann der Fahrbahnzustand des von dem Vorderfahrzeug befahrenen Fahrbahnbereichs einfach und zuverlässig ermittelt werden. Insbesondere über die Nickbewegung und die Wankbewegung des Vorderfahrzeugs kann dabei auch ermittelt werden, mit welchem Rad bzw. mit welchen Rädern das Vorderfahrzeug über die Fahrbahnunebenheit gefahren ist. Über die Wankbewegung des Vorderfahrzeugs kann daher auch die Position der Fahrbahnunebenheit in Fahrbahn-Querrichtung bestimmt werden. Über die Nickbewegung des Vorderfahrzeugs kann zudem der Abstand zwischen dem Fahrzeug und der Fahrbahnunebenheit mit besonders hoher Genauigkeit bestimmt werden.

In einer bevorzugten konkreten Ausgestaltung wird zur Ermittlung der Vertikalbewegung des Vorderfahrzeugs mittels der Bild-Auswerteeinrichtung aus der wenigstens einen Aufnahme der Bild-Erfassungseinrichtung ein Vertikalabstand zwischen wenigstens einem, insbesondere heckseitigen, Bereich bzw. Punkt des Vorderfahrzeugs und der Fahrbahn zu mehreren Zeitpunkten ermittelt. Aus den ermittelten Vertikalabständen und dem Zeitabstand zwischen den Zeitpunkten kann dann mittels der Bild-Auswerteeinrichtung die Vertikalbewegung des wenigstens einen Fahrzeugbereichs und somit auch des Vorderfahrzeugs relativ zur Fahrbahn ermittelt werden. So kann die Vertikalbewegung des Vorderfahrzeugs relativ zur Fahrbahn einfach und effektiv ermittelt werden. Der wenigstens eine definierte Bereich bzw. Punkt des Vorderfahrzeugs kann dabei beispielsweise durch eine Unterkante oder durch eine Oberkante eines Fahrzeughecks gebildet sein.

Weiter bevorzugt wird zur Ermittlung der Vertikalbewegung des Vorderfahrzeugs mittels der Bild-Auswerteeinrichtung aus den ermittelten Vertikalabständen des wenigstens einen Fahrzeugbereichs der Wankwinkel bzw. die Querlage und/oder der Nickwinkel bzw. die Längslage einer Karosserie des Vorderfahrzeugs relativ zur Fahrbahn zu den mehreren Zeitpunkten ermittelt. So kann der Zustand des vorausliegenden Fahrbahnbereichs einfach und effektiv ermittelt werden. Insbesondere kann durch die Ermittlung der Nickbewegung bzw. der Wankbewegung des Vorderfahrzeugs auch die Position einer Fahrbahnunebenheit relativ zu dem Vorderfahrzeug ermittelt werden.

Vorzugsweise wird mittels der Bild-Auswerteeinrichtung auch der Fahrzeugtyp und/oder der Beladungszustand des Vorderfahrzeugs ermittelt. Die ermittelten Information zum Fahrzeugtyp und/oder zum Beladungszustand des Vorderfahrzeugs kann dann bei der Ermittlung des Zustands des vor dem Fahrzeug befindlichen Fahrbahnbereichs ebenfalls von der Fahrbahnzustands-Ermittlungseinrichtung berücksichtigt werden. Über den Fahrzeugtyp bzw. den Beladungszustand des Vorderfahrzeugs kann der Zustand des vorausliegenden Fahrbahnbereichs mit besonders hoher Genauigkeit ermittelt werden.

Konkret kann die Bild-Erfassungseinrichtung und/oder die Bild-Auswerteeinrichtung und/oder wenigstens ein Bestandteil der Fahrbahnzustands-Ermittlungseinrichtung zusätzlich auch von wenigstens einem Fahrerassistenzsystem des Fahrzeugs genutzt werden, um das Fahrzeug besonders effizient auszubilden. Bevorzugt ist dabei vorgesehen, dass das wenigstens eine Fahrerassistenzsystem durch ein Spurhalte-Assistenzsystem und/oder durch einen geregelten Tempomat und/oder durch ein Notbrems-Assistenzsystem des Fahrzeugs gebildet ist.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: in einer schematischen Darstellung eine erste Verkehrssituation;
- Figur 2: in einer Darstellung gemäß Figur 1 eine zweite Verkehrssituation;
- Figur 3: eine schematische Darstellung, aus der der Aufbau eines erfindungsgemäßen Fahrzeugs hervorgeht; und
- Figur 4: ein Diagramm, aus dem der Ablauf einer erfindungsgemäßen Verfahrensführung hervorgeht.

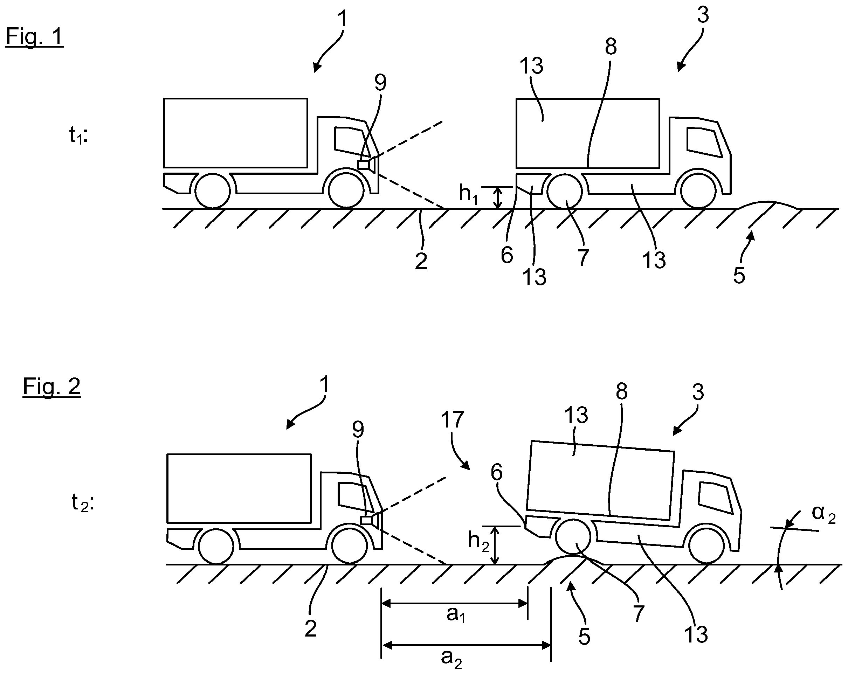

In Figur 1 ist eine erste Verkehrssituation zu einem Zeitpunkt t₁ gezeigt. Dabei befindet sich ein hier beispielhaft als Lastkraftwagen ausgebildetes Fahrzeug 1 auf einer Fahrbahn 2 in Fahrtrichtung hinter einem auf der gleichen Fahrspur wie das Fahrzeug 1 fahrenden, hier ebenfalls als Lastkraftwagen ausgebildeten Vorderfahrzeug 3. Zudem befindet sich hier in Fahrtrichtung vor dem Vorderfahrzeug 3 auf der Fahrbahn 2 eine Fahrbahnunebenheit 5. Diese Fahrbahnunebenheit 5 ist hier beispielhaft eine nach oben ragende Kuppe bzw. Bodenwelle, die beispielsweise durch eine Fahrbahnverschmutzung gebildet sein kann. Mit Ausnahme der vor dem Vorderfahrzeug 3 befindlichen Fahrbahnunebenheit 5 ist die Fahrbahn 2 hier eben bzw. ohne weitere Fahrbahnunebenheit ausgebildet. Eine von hinten sichtbare, in Fahrzeug-Querrichtung verlaufende heckseitige Querkante 6 des Vorderfahrzeugs 3 hier dabei mit einem Höhenabstand h₁ vertikal von der Fahrbahn 2 beabstandet. Zudem ist hier eine seitlich äußere Längskante 8 des Vorderfahrzeugs 3 im Wesentlichen parallel zu der Fahrbahn 2 ausgerichtet, so dass ein hier nicht eingezeichneter Winkel α₁ zwischen der Längskante 8 und der Fahrbahn 2 in etwa 0° beträgt.

In Figur 2 ist eine zweite Verkehrssituation zu einem späteren Zeitpunkt t₂ gezeigt. Im Vergleich zu der in Fig. 1 gezeigten ersten Fahrsituation haben sich die Fahrzeuge 1, 3 hier in Fahrtrichtung fortbewegt. Konkret überfährt das Vorderfahrzeug 3 zu dem Zeitpunkt t₂ mit einer Hinterachse 7 die Fahrbahnunebenheit 5, so dass sich die Hinterachse 7 des Vorderfahrzeugs 3 hier auf dem in Vertikalrichtung obersten Punkt der Fahrbahnunebenheit 5 befindet. Im Vergleich zu dem Zeitpunkt t₁ ist die heckseitige Querkante 6 des Vorderfahrzeugs 3 hier somit mit einem größer als der Höhenabstand h₁ ausgebildeten Höhenabstand h₂ vertikal von der Fahrbahn 2 beabstandet. Zudem ist die seitlich äußere Längskante 8 des Vorderfahrzeugs 3 hier mit einem Winkel α₂ und somit nicht mehr parallel relativ zu der Fahrbahn 2 ausgerichtet.

Wie in Figur 1 und Figur 2 weiter gezeigt ist, weist das hintere Fahrzeug 1 eine schematisch angedeutete Bild-Erfassungseinrichtung 9 auf, mittels das vor dem Fahrzeug 1 fahrende Vorderfahrzeug 3 bildlich oder filmisch erfasst werden kann. Die Bild-Erfassungseinrichtung 9 ist hier beispielhaft durch eine Kamera gebildet und in Fahrzeug-Längsrichtung nach vorne gerichtet.

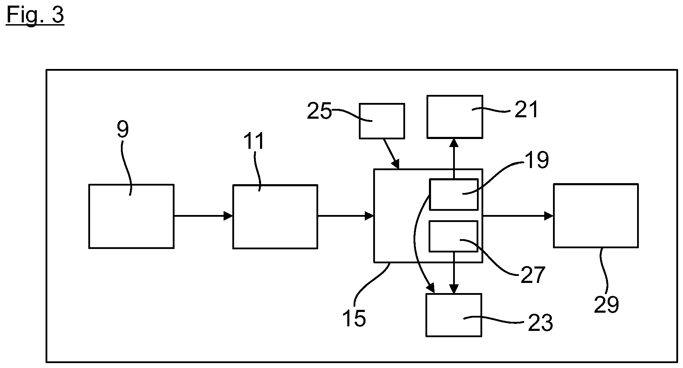

Wie weiter aus Figur 3 hervorgeht, weist das Fahrzeug 1 auch eine signaltechnisch mit der Kamera 9 verbundene Bild-Auswerteeinrichtung 11 auf, mittels aus der Aufnahme der Kamera 9 die Vertikalbewegung einer Karosserie bzw. eines Aufbaus 13 des Vorderfahrzeugs 3 relativ zur Fahrbahn 2 ermittelt werden kann. Konkret kann hier mittels der Bild-Auswerteeinrichtung 11 aus den Aufnahmen der Kamera 9 die Nickbewegung und die Wankbewegung der Karosserie 13 des Vorderfahrzeugs 3 relativ zur Fahrbahn 2 als Vertikalbewegung ermittelt werden. Zudem kann hier mittels der Bild-Auswerteeinrichtung 11 auch die Bewegung der Vorderfahrzeug-Karosserie 13 in Hochachsenrichtung des Vorderfahrzeugs 3 relativ zur Fahrbahn 2, d.h. die Vertikalbewegung der gesamten Vorderfahrzeug-Karosserie 13 parallel zur Fahrbahn 2, ermittelt werden. Weiter kann mittels der Bild-Auswerteeinrichtung 11 aus den Aufnahmen der Kamera 9 auch der Fahrzeugtyp des vorausfahrenden Vorderfahrzeugs 3 ermittelt werden. In den in Fig. 1 und Fig. 2 gezeigten Verkehrssituationen ermittelt die Bild-Auswerteeinrichtung 11 hier somit eine Nickbewegung des Vorderfahrzeugs 3. Zudem ermittelt die Bild-Auswerteeinrichtung 11 hier auch, dass es sich bei dem Vorderfahrzeug 3 um einen Lastkraftwagen handelt.

Gemäß Figur 3 weist das Fahrzeug 1 weiter auch eine signaltechnisch mit der Bild-Auswerteeinrichtung 11 verbundene Fahrbahnzustand-Ermittlungseinrichtung 15 auf, mittels der aus der ermittelten Vertikalbewegung des Vorderfahrzeugs 3 der Zustand eines von dem Vorderfahrzeug 3 befahrenen und somit vor dem Fahrzeug 1 befindlichen vorausliegenden Fahrbahnbereichs 17 (Figur 2) ermittelt bzw. abgeschätzt werden kann. Mittels der Fahrbahnzustand-Ermittlungseinrichtung 15 kann hier dabei aus der ermittelten Vertikalbewegung des Vorderfahrzeugs 3 erfasst werden, ob sich auf dem vorausliegenden Fahrbahnbereich 17 wenigstens eine Fahrbahnunebenheit 5 befindet oder nicht. Dabei kann hier mittels der Fahrbahnzustand-Ermittlungseinrichtung 15 aus der ermittelten Vertikalbewegung des Vorderfahrzeugs 3 auch die Art der wenigstens einen Fahrbahnunebenheit 5 ermittelt werden. In den in Fig. 1 und Fig. 2 gezeigten Verkehrssituationen ermittelt die Fahrbahnzustand-Ermittlungseinrichtung 15 somit, dass sich auf dem vorausliegenden Fahrbahnbereich 17 die Fahrbahnunebenheit 5 befindet. Zudem ermittelt die Fahrbahnzustand-Ermittlungseinrichtung 15 auch, dass es sich bei der Fahrbahnunebenheit 5 um eine nach oben ragende Kuppe handelt.

Wie in Figur 3 weiter gezeigt ist, weist die Fahrbahnzustands-Ermittlungseinrichtung 15 hier beispielhaft eine Abstand-Ermittlungseinrichtung 19 auf, mittels der der Abstand a₁ zwischen dem Fahrzeug 1 und dem Vorderfahrzeug 3 ermittelt werden kann. Aus dem Abstand a₁ zwischen dem Fahrzeug 1 und dem Vorderfahrzeug 3 und aus der ermittelten Vertikalbewegung des Vorderfahrzeugs 3 kann dann mittels der Fahrbahnzustand-Ermittlungseinrichtung 15 auch ein Abstand a₂ zwischen dem Fahrzeug 1 und der erfassten Fahrbahnunebenheit 5 auf dem vorausliegenden Fahrbahnbereich 17 ermittelt bzw. abgeschätzt werden. Zur Ermittlung des Abstands zwischen dem Fahrzeug 1 und der erfassten Fahrbahnunebenheit 5 wird hier beispielsweise auch die ermittelte Nickbewegung des Vorderfahrzeugs 3 berücksichtigt. Alternativ könnte zur Abschätzung des Abstands zwischen dem Fahrzeug 1 und der erfassten Fahrbahnunebenheit 5 auch der mittels der Abstand-Ermittlungseinrichtung 19 ermittelte Abstand zwischen dem Fahrzeug 1 und dem Vorderfahrzeug 3 als Abstand zwischen dem Fahrzeug 1 und einer erfassten Fahrbahnunebenheit festgelegt werden. Bei der in Fig. 2 gezeigten Verkehrssituation ist ein ermittelter Abstand a₁ zwischen dem Fahrzeug 1 und dem Vorderfahrzeug 3 somit kleiner als ein ermittelter Abstand a₂ zwischen dem Fahrzeug 1 und der Fahrbahnunebenheit 5.

Weiter kann die Abstand-Ermittlungseinrichtung 19 beispielsweise durch einen Radarsensor oder durch einen Ultraschallsensor gebildet sein. Zudem wird die Abstand-Ermittlungseinrichtung 19 hier beispielhaft auch noch von einem geregelten Tempomat 21 und von einem Notbrems-Assistenzsystem 23 des Fahrzeugs 1 genutzt.

Gemäß Figur 3 ist die Fahrbahnzustand-Ermittlungseinrichtung 15 weiter auch signaltechnisch mit einer Geschwindigkeit-Ermittlungseinrichtung 25 des Fahrzeugs 1 verbunden, mittels der die Geschwindigkeit des Fahrzeugs 1 ermittelt wird. Zudem weist die Fahrbahnzustand-Ermittlungseinrichtung 15 hier auch eine Geschwindigkeit-Ermittlungseinrichtung 27 auf, mittels der die Geschwindigkeit des Vorderfahrzeugs 3 ermittelt werden kann. Aus dem ermittelten Abstand a₂ zwischen dem Fahrzeug 1 und der erfassten Fahrbahnunebenheit 5, aus der Geschwindigkeit des Fahrzeugs 1 und aus der Geschwindigkeit des Vorderfahrzeugs 3 kann mittels der Fahrbahnzustands-Ermittlungseinrichtung 15 hier auch der Zeitpunkt ermittelt werden, an dem das Fahrzeug 1 voraussichtlich die erfasste Fahrbahnunebenheit 5 erreicht. Die Geschwindigkeits-Ermittlungseinrichtung 27 wird hier zudem ebenfalls von dem Notbrems-Assistenzsystem 23 des Fahrzeugs 1 genutzt.

Die mittels der Fahrbahnzustands-Ermittlungseinrichtung 15 ermittelten Informationen bezüglich der Art einer erfassten vorausliegenden Fahrbahnunebenheit 5 und bezüglich des Zeitpunkts, an dem die Fahrbahnunebenheit 5 voraussichtlich erreicht wird, wird dann an ein signaltechnisch mit der Fahrbahnzustand-Ermittlungseinrichtung 15 verbundenes Fahrwerkregelsystem 29 des Fahrzeugs 1 übermittelt. So kann das Fahrwerkregelsystem 29 des Fahrzeugs 1 frühzeitig auf die erfasste vorausliegende Fahrbahnunebenheit reagieren.

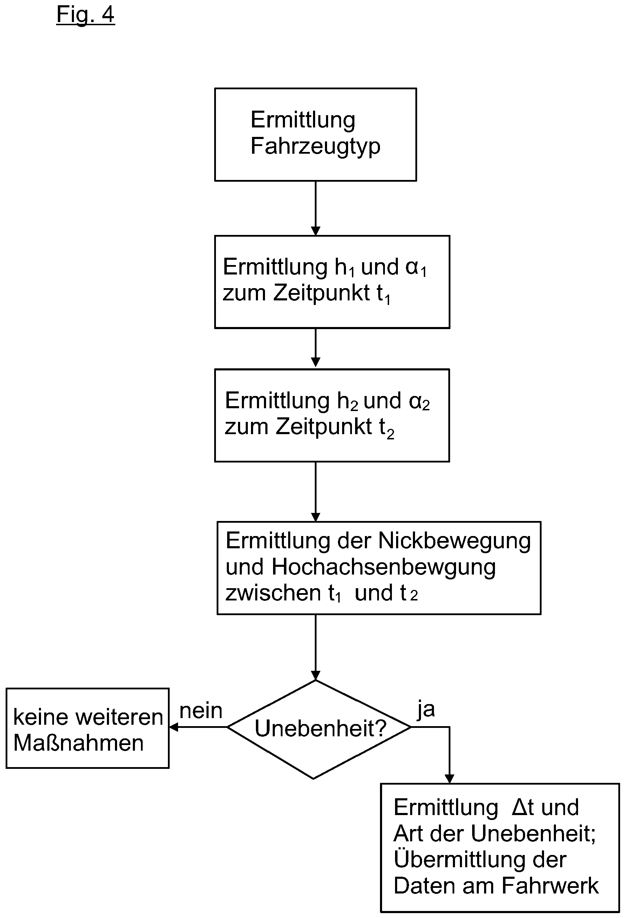

Anhand von Figur 4 wird die erfindungsgemäße Verfahrensführung bei den in Figur 1 und Figur 2 gezeigten Verkehrssituationen nochmals zusammengefasst erläutert:
Aus den Aufnahmen der Kamera 9 wird mittels der Bild-Auswerteinrichtung 11 zunächst der Fahrzeugtyp des Vorderfahrzeugs 3 ermittelt. Anschließend wird mittels der Bild-Auswerteinrichtung 11 zu dem Zeitpunkt t₁ der Höhenabstand h₁ zwischen der Querkante 6 des Vorderfahrzeugs 3 und der Fahrbahn 2 ermittelt. Dabei wird auch ermittelt, dass zu dem Zeitpunkt t₁ die seitliche Längskante 8 des Vorderfahrzeugs 3 parallel zu der Fahrbahn 2 ausgerichtet ist. Dann werden zu dem späteren Zeitpunkt t₂ der Höhenunterschied h₂ zwischen der Querkante 6 des Vorderfahrzeugs 3 und der Fahrbahn 2 und der Winkel α₂ zwischen der seitlichen Längskante 8 des Vorderfahrzeugs 3 und der Fahrbahn 2 ermittelt. Aus den Informationen zum Fahrzeugtyp des Vorderfahrzeugs 3, den Höhenabständen h₁ und h₂ und den erfassten Ausrichtungen der Längskante 8 werden dann die Nickbewegung und die Hochachsenbewegung des Vorderfahrzeugs 3 zwischen dem Zeitpunkt t₁ und dem Zeitpunkt t₂ ermittelt. Diese Informationen zur Nickbewegung und Hochachsenbewegung des Vorderfahrzeugs 3 werden an die Fahrbahnzustand-Ermittlungseinrichtung 15 übermittelt, mittels der diese Informationen analysiert werden. Mittels der Fahrbahnzustand-Ermittlungseinrichtung 15 wird hier dabei erfasst, ob sich auf dem vorausliegenden Fahrbahnbereich eine Fahrbahnunebenheit 5 befindet oder nicht. Wird dann die Fahrbahnunebenheit 5 erfasst, wird mittels der Fahrbahnzustands-Ermittlungseinrichtung 15 auch die Art der Fahrbahnunebenheit 5 und der Zeitpunkt ermittelt, an dem das Fahrzeug die Fahrbahnunebenheit 5 voraussichtlich erreicht. Schließlich werden diese Informationen dann an das Fahrwerkregelsystem 29 des Fahrzeugs 1 übermittelt.

### Bezugszeichenliste

- 1: Fahrzeug
- 2: Fahrbahn
- 3: Vorderfahrzeug
- 5: Fahrbahnunebenheit
- 6: Querkante
- 7: Hinterachse
- 8: Längskante
- 9: Bild-Erfassungseinrichtung
- 11: Bild-Auswerteeinrichtung
- 13: Karosserie
- 15: Fahrbahnzustands-Ermittlungseinrichtung
- 17: vorausliegender Fahrbahnbereich
- 19: Abstands-Ermittlungseinrichtung
- 21: geregelter Tempomat
- 23: Notbrems-Assistenzsystem
- 25: Geschwindigkeits-Ermittlungseinrichtung
- 27: Geschwindigkeits-Ermittlungseinrichtung
- 29: Fahrwerkregelsystem
- a₁: Abstand
- a₂: Abstand
- h₁: Höhenunterschied
- h₂: Höhenunterschied
- t₁: erster Zeitpunkt
- t₂: zweiter Zeitpunkt
- α₂: Winkel

## Patentansprüche

1. Verfahren zum Betreiben eines Fahrzeugs (1), wobei das Fahrzeug (1) eine Bild-Erfassungseinrichtung (9) aufweist, mittels der ein in Fahrtrichtung vor dem Fahrzeug (1) auf der gleichen Fahrspur fahrendes Vorderfahrzeug (3) mit wenigstens einer Aufnahme bildlich und/oder filmisch erfasst wird, wobei das Fahrzeug (1) eine Bild-Auswerteeinrichtung (11) aufweist, mittels der aus der Aufnahme der Bild-Erfassungseinrichtung (9) die Vertikalbewegung des Vorderfahrzeugs (1) relativ zur Fahrbahn (2) ermittelt wird, und wobei das Fahrzeug (1) eine Fahrbahnzustand-Ermittlungseinrichtung (15) aufweist, mittels der aus der ermittelten Vertikalbewegung des Vorderfahrzeugs (3) der Zustand eines vor dem Fahrzeug (1) befindlichen, vorausliegenden Fahrbahnbereichs (17) ermittelt wird, und wobei die ermittelten Informationen zu dem Zustand des vorausliegenden Fahrbahnbereichs (17) an ein signaltechnisch mit der Fahrbahnzustand-Ermittlungseinrichtung (15) verbundenes Fahrwerkregelsystem (29) des Fahrzeugs (1) übermittelt werden, und wobei mittels der Fahrbahnzustand-Ermittlungseinrichtung (15) aus der ermittelten Vertikalbewegung des Vorderfahrzeugs (3) erfasst wird, ob sich auf dem vorausliegenden Fahrbahnbereich (17) eine Fahrbahnunebenheit (5) befindet, und wobei die Fahrbahnzustand-Ermittlungseinrichtung (15) eine Abstand-Ermittlungseinrichtung (19) aufweist, mittels der der Abstand (a₁) zwischen dem Fahrzeug (1) und dem Vorderfahrzeug (3) ermittelt wird, **dadurch gekennzeichnet dass** mittels der Fahrbahnzustand-Ermittlungseinrichtung (15) aus dem Abstand (a₁) zwischen dem Fahrzeug (1) und dem Vorderfahrzeug (3) und aus der ermittelten Vertikalbewegung des Vorderfahrzeugs (13) ein Abstand (a₂) zwischen dem Fahrzeug (1) und der erfassten Fahrbahnunebenheit (5) auf dem vorderen Fahrbahnbereich (17) ermittelt wird, und dass mittels der Fahrbahnzustand-Ermittlungseinrichtung (15) aus dem Abstand (a₂) zwischen dem Fahrzeug (1) und der erfassten Fahrbahnunebenheit (5) und aus der Geschwindigkeit des Fahrzeugs (1) der Zeitpunkt ermittelt wird, an dem das Fahrzeug (1) voraussichtlich die Fahrbahnunebenheit (5) erreicht, und dass dieser ermittelte Zeitpunkt an das Fahrwerkregelsystem (29) übermittelt wird, wobei vorgesehen ist, dass bei der Ermittlung dieses Zeitpunkts auch die mittels einer Geschwindigkeits-Ermittlungseinrichtung (27) der Fahrbahnzustand-Ermittlungseinrichtung (15) ermittelte Geschwindigkeit des Vorderfahrzeugs (3) berücksichtigt wird, und dass mittels der Bild-Auswerteeinrichtung (11) aus der Aufnahme der Bild-Erfassungseinrichtung (9) eine Nickbewegung, eine Wankbewegung und eine Hochachsenbewegung einer Karosserie (13) des Vorderfahrzeugs (3) relativ zur Fahrbahn (2) als Vertikalbewegung ermittelt wird.

2. Verfahren nach Anspruch 1, **dadurch gekennzeichnet, dass** mittels der Fahrbahnzustand-Ermittlungseinrichtung (15) aus der ermittelten Vertikalbewegung des Vorderfahrzeugs (3) die Art der wenigstens einen Fahrbahnunebenheit (5) ermittelt wird, und dass die ermittelten Informationen zu der Art der wenigstens einen Fahrbahnunebenheit (5) an das Fahrwerkregelsystem (29) übermittelt werden.

3. Verfahren nach einem der vorhergehenden Ansprüche, **dadurch gekennzeichnet, dass** zur Ermittlung der Vertikalbewegung des Vorderfahrzeugs (3) mittels der Bild-Auswerteeinrichtung (11) aus der wenigstens einen Aufnahme der Bild-Erfassungseinrichtung (9) ein Vertikalabstand (h₁, h₂) zwischen wenigstens einem heckseitigen Bereich (6) des Vorderfahrzeugs (3) und der Fahrbahn (2) zu mehreren Zeitpunkten (t₁, t₂) ermittelt wird, und dass aus den ermittelten Vertikalabständen (h₁, h₂) und dem Zeitabstand zwischen den Zeitpunkten (t₁, t₂) mittels der Bild-Auswerteeinrichtung (11) die Vertikalbewegung des wenigstens einen Fahrzeugbereichs (6) relativ zur Fahrbahn (2) ermittelt wird.

4. Verfahren nach Anspruch 3, **dadurch gekennzeichnet, dass** zur Ermittlung der Vertikalbewegung des Vorderfahrzeugs (3) mittels der Bild-Auswerteeinrichtung (11) aus den ermittelten Vertikalabständen (h₁, h₂) des wenigstens einen Fahrzeugbereichs (6) der Wankwinkel und/oder der Nickwinkel einer Karosserie (13) des Vorderfahrzeugs (3) relativ zur Fahrbahn (2) zu den mehreren Zeitpunkten (t₁, t₂) ermittelt wird.

5. Verfahren nach einem der vorhergehenden Ansprüche, **dadurch gekennzeichnet, dass** mittels der Bild-Auswerteeinrichtung (11) der Fahrzeugtyp und/oder der Beladungszustand des Vorderfahrzeugs (3) ermittelt werden, und dass die ermittelten Informationen zum Fahrzeugtyp und/oder zum Beladungszustand des Vorderfahrzeugs (3) bei der Ermittlung des Zustands des vor dem Fahrzeug (1) befindlichen Fahrbahnbereichs (17) von der Fahrbahnzustand-Ermittlungseinrichtung (15) berücksichtigt werden.

6. Verfahren nach einem der vorhergehenden Ansprüche, **dadurch gekennzeichnet, dass** die Bild-Erfassungseinrichtung (9) und/oder die Bild-Auswerteeinrichtung (11) und/oder wenigstens ein Bestandteil der Fahrbahnzustand-Ermittlungseinrichtung (15) zusätzlich von wenigstens einem Fahrerassistenzsystem des Fahrzeugs (1) genutzt wird, wobei vorgesehen ist, dass das wenigstens eine Fahrerassistenzsystem durch ein Spurhalte-Assistenzsystem und/oder durch einen geregelten Tempomat (21) und/oder durch ein Notbrems-Assistenzsystem (23) gebildet ist.

## Claims

1. Method for operating a vehicle (1), wherein the vehicle (1) has an image-recording device (9) by means of which a vehicle in front (3) which is travelling on the same lane in front of the vehicle (1) in the direction of travel is recorded visually and/or on film with at least one recording, wherein the vehicle (1) has an image-evaluating device (11) by means of which the vertical movement of the vehicle in front (1) relative to the carriageway (2) is determined from the recording by the image-recording device (9), and wherein the vehicle (1) has a carriageway-state-determining device (15) by means of which the state of a carriageway region (17) which lies ahead and is located in front of the vehicle (1) is determined from the determined vertical movement of the vehicle in front (3), and wherein the determined information about the state of the carriageway region (17) lying ahead is transmitted to a chassis control system (29), connected by signalling equipment to the carriageway-state-determining device (15), of the vehicle (1), and wherein by means of the carriageway-state-determining device (15) it is detected from the determined vertical movement of the vehicle in front (3) whether there is an uneven portion (5) of the carriageway on the carriageway region (17) lying ahead, and wherein the carriageway-state-determining device (15) has a distance-determining device (19), by means of which the distance (a₁) between the vehicle (1) and the vehicle in front (3) is determined, **characterized in that** a distance (a₂) between the vehicle (1) and the detected uneven portion (5) of the carriageway on the carriageway region (17) in front is determined from the distance (a₁) between the vehicle (1) and the vehicle in front (3) and from the determined vertical movement of the vehicle in front (13) by means of the carriageway-state-determining device (15), and **in that** the time at which the vehicle (1) is expected to reach the uneven portion (5) of the carriageway is determined from the distance (a₂) between the vehicle (1) and the detected uneven portion (5) of the carriageway and from the speed of the vehicle (1) by means of the carriageway-state-determining device (15), and **in that** this determined time is transmitted to the chassis control system (29), wherein there is provision that the speed of the vehicle in front (3) which is determined by means of a speed-determining device (27) of the carriageway-state-determining device (15) is also taken into account in the determination of this time, and **in that** a pitching movement, a rolling movement and a vertical axis movement of a bodywork (13) of the vehicle in front (3) relative to the carriageway (2) is determined as a vertical movement from the recording of the image-recording device (9) by means of the image-evaluating device (11).

2. Method according to Claim 1, **characterized in that** the type of the at least one uneven portion (5) of the carriageway is determined from the determined vertical movement of the vehicle in front (3) by means of the carriageway-state-determining device (15), and **in that** the determined information about the type of the at least one uneven portion (5) of the carriageway is transmitted to the chassis control system (29).

3. Method according to either of the preceding claims, **characterized in that** in order to determine the vertical movement of the vehicle in front (3) from the at least one recording of the image-recording device (9) by means of the image-evaluating device (11) a vertical distance (h₁, h₂) between at least one rear-end region (6) of the vehicle in front (3) and the carriageway (2) is determined at a plurality of times (t₁, t₂), and **in that** the vertical movement of the at least one vehicle region (6) relative to the carriageway (2) is determined from the determined vertical distances (hi, h₂) and the time interval between the times (t₁, t₂) by means of the image-evaluating device (11).

4. Method according to Claim 3, **characterized in that** in order to determine the vertical movement of the vehicle in front (3) the rolling angle and/or the pitching angle of a bodywork (13) of the vehicle in front (3) relative to the carriageway (2) is determined at the plurality of times (t₁, t₂) from the determined vertical distances (h₁, h₂) of the at least one vehicle region (6) by means of the image-evaluating device (11).

5. Method according to one of the preceding claims, **characterized in that** the type of vehicle and/or the load state of the vehicle in front (3) are determined by means of the image-evaluating device (11), and **in that** the determined information about the type of vehicle and/or about the load state of the vehicle in front (3) are taken into account in the determination of the state of the carriageway region (17) located in front of the vehicle (1), by the carriageway-state-determining device (15).

6. Method according to one of the preceding claims, **characterized in that** the image-recording device (9) and/or the image-evaluating device (11) and/or at least one component of the carriageway-state-determining device (15) is additionally used by at least one driver assistance system of the vehicle (1), wherein there is provision that the at least one driver assistance system is formed by a lane-keeping assistance system and/or by a regulated cruise controller (21) and/or by an emergency-braking assistance system (23).

## Revendications

1. Procédé pour faire fonctionner un véhicule (1), le véhicule (1) possédant un dispositif de capture d'images (9) au moyen duquel un véhicule précédent (3), qui circule sur la même voie de circulation devant le véhicule (1) dans le sens du déplacement, est capturé sous forme d'image et/ou de film avec au moins un enregistrement, le véhicule (1) possédant un dispositif d'interprétation d'image (11) au moyen duquel le mouvement vertical du véhicule précédent (1) par rapport à la chaussée (2) est déterminé à partir de l'enregistrement du dispositif de capture d'images (9), et le véhicule (1) possédant un dispositif de détermination d'état de la chaussée (15) au moyen duquel l'état d'une zone de la chaussée (17) à venir qui se trouve devant le véhicule (1) est déterminé à partir du mouvement vertical déterminé du véhicule précédent (3), et les informations déterminées à propos de l'état de la zone de la chaussée (17) à venir étant communiquées à un système de régulation de mécanisme de roulement (29) du véhicule (1) relié de manière signalétique au dispositif de détermination d'état de la chaussée (15), et la présence ou non d'une irrégularité de la chaussée (5) sur la zone de la chaussée (17) à venir étant détectée au moyen du dispositif de détermination d'état de la chaussée (15) à partir du mouvement vertical déterminé du véhicule précédent (3), et le dispositif de détermination d'état de la chaussée (15) possédant un dispositif de détermination de distance (19) au moyen duquel est déterminée la distance (a₁) entre le véhicule (1) et le véhicule précédent (3), **caractérisé en ce qu'**une distance (a₂) entre le véhicule (1) et l'irrégularité de la chaussée (5) détectée sur la zone de la chaussée (17) à venir est déterminée au moyen du dispositif de détermination d'état de la chaussée (15) à partir de la distance (a₁) entre le véhicule (1) et le véhicule précédent (3) et à partir du mouvement vertical déterminé du véhicule précédent (13), et **en ce que** l'instant auquel le véhicule (1) atteint probablement l'irrégularité de la chaussée (5) est déterminé au moyen du dispositif de détermination d'état de la chaussée (15) à partir de la distance (a₂) entre le véhicule (1) et l'irrégularité de la chaussée (5) détectée et à partir de la vitesse du véhicule (1), et **en ce que** cet instant déterminé est communiqué au système de régulation de mécanisme de roulement (29), en prévoyant que lors de la détermination de cet instant, la vitesse du véhicule précédent (3), déterminée au moyen d'un dispositif de détermination de la vitesse (27) du dispositif de détermination d'état de la chaussée (15), est prise en compte, et **en ce qu'**un mouvement de tangage, un mouvement de roulis et un mouvement d'axe de hauteur d'une carrosserie (13) du véhicule précédent (3) par rapport à la chaussée (2) sont déterminés en tant que mouvement vertical au moyen du dispositif d'interprétation d'image (11) à partir de l'enregistrement du dispositif de capture d'images (9).

2. Procédé selon la revendication 1, **caractérisé en ce que** la nature de l'au moins une irrégularité de la chaussée (5) est déterminée au moyen du dispositif de détermination d'état de la chaussée (15) à partir du mouvement vertical déterminé du véhicule précédent (3), et **en ce que** les informations déterminées à propos de la nature de l'au moins une irrégularité de la chaussée (5) sont communiquées au système de régulation de mécanisme de roulement (29).

3. Procédé selon l'une des revendications précédentes, **caractérisé en ce qu'**en vue de déterminer le mouvement vertical du véhicule précédent (3), une distance verticale (hi, h₂) entre au moins une zone côté arrière (6) du véhicule précédent (3) et la chaussée (2) à plusieurs instants (t₁, t₂) est déterminée au moyen du dispositif d'interprétation d'image (11) à partir de l'au moins un enregistrement du dispositif de capture d'images (9), et **en ce que** le mouvement vertical de l'au moins une zone de véhicule (6) par rapport à la chaussée (2) est déterminé à partir des distances verticales (h₁, h₂) déterminées et de l'intervalle de temps entre les instants (t₁, t₂) au moyen du dispositif d'interprétation d'image (11).

4. Procédé selon la revendication 3, **caractérisé en ce qu'**en vue de déterminer le mouvement vertical du véhicule précédent (3), l'angle de roulis et/ou l'angle de tangage d'une carrosserie (13) du véhicule précédent (3) par rapport à la chaussée (2) aux plusieurs instants (t₁, t₂) est déterminé à partir des distances verticales (h₁, h₂) déterminées de l'au moins une zone de véhicule (6) au moyen du dispositif d'interprétation d'image (11).

5. Procédé selon l'une des revendications précédentes, **caractérisé en ce que** le type de véhicule et/ou l'état de chargement du véhicule précédent (3) est déterminé au moyen du dispositif d'interprétation d'image (11), et **en ce que** les informations déterminées à propos du type de véhicule et/ou de l'état de chargement du véhicule précédent (3) sont prises en compte par le dispositif de détermination d'état de la chaussée (15) lors de la détermination de l'état de la zone de la chaussée (17) qui se trouve devant le véhicule (1).

6. Procédé selon l'une des revendications précédentes, **caractérisé en ce que** le dispositif de capture d'images (9) et/ou le dispositif d'interprétation d'image (11) et/ou au moins une partie constitutive du dispositif de détermination d'état de la chaussée (15) est en plus utilisé par au moins un système d'assistance au conducteur du véhicule (1), en prévoyant que l'au moins un système d'assistance au conducteur est formé par un système d'alerte de franchissement involontaire de ligne et/ou par un régulateur de vitesse (21) régulé et/ou par un système d'assistance au freinage d'urgence (23).
